# EUROPEAN PATENT APPLICATION

(11) **EP 2 136 329 A2**
(43) Date of publication of application: **23.12.2009**
(21) Application number: 09007412.1
(22) Date of filing: 04.06.2009
(51) Int. Cl.: G06Q 30/00

(54) **Comprehensive computer implemented system and method for adapting the content of digital signage displays**

(30) Priority: 05.06.2008 IL 19197808
(71) Applicant: Deutsche Telekom AG, 53113 Bonn (DE)
(72) Inventor: Shmueli, Erez, Beer-Sheva 84233 (IL); Kruglov, Alexander, Arad 89041 (IL); Elovici, Yuval, 79864 (IL); Englert, Roman, Even Yehuda 40500 (IL)
(74) Representative: Flaccus, Rolf-Dieter

(57) **Abstract**

The invention is a comprehensive computer implemented digital signage system and method for personalizing the advertising content according to the requirements and/or desire of a customer that is currently viewing the screen. The system automatically deduces which advertising content should be displayed from a plurality of sources of information, which include: real time data gathered by a variety of sensors that gather data related to both the customer's physical characteristics and to the accessories that he/she carries or wears; real time data gathered by a variety of sensors that observe actions carried out by the customer; non-consumer specific data that might affect the customer's buying habits; and statistical data collected by the system from previous customers, products, and sales or data entered manually by the customer or by others.

## Description

### Field of the Invention

The invention is related to the field of advertising and merchandising. In particular the invention relates to digital signage displays.

### Background of the Invention

There is typically provided in places such as airports and train stations a system comprised of a plurality of digital display screens dispersed throughout the areas open to the public. On these screens are displayed information for the travelers and advertising clips related to products available in the airport shops, to attractions at destinations, etc. Similar systems exist in retail stores of all types in which the advertising and merchandising information is related to the products on sale in the store, daily specials, etc.

In early systems of this type, which in practice are the majority of systems in use today, the content of the information displayed is determined by the system manager who uses material supplied by clients who pay to have their advertisements displayed and/or the products that the store wants to promote in order to attract customers to the store. In general material is presented for a number of products displayed a series of short video clips played one after another and repeated cyclically until the system manager replaces one or more of the clips and the process continues with the new clips. The material displayed is generally directed at groups of observers/customers whose characteristics and interests have been determined in advance. Obviously an attempt is made to adjust the displayed content to the expected audience, e.g. dresses would not be displayed in a store dedicated to men's clothing. On the other hand, it is just as obvious that it is not possible to efficiently target the interests of a specific group of customers and definitely not that of an individual. For example, returning to the example of the men's clothing store, if the display is a series of clips relating to suits, ties, overcoats, shirts, and pants, then a customer entering the store to buy a shirt will find the majority of the information not useful to him. A partial solution is provided by point-of-sale oriented systems in which the content displayed on all of the screens is not the same. The content of the screen is adjusted to the type of merchandise sold in its near vicinity, e.g. the screen in the shirt department would display only clips related to different styles, colors, etc. of shirts. Video merchandising/information systems of this type are described, for example, in US 4,775,935 and US 6,674,357.

The next step in the development of digital signage display systems was to attempt to the learn some information about the characteristics of the person/s viewing the screen at any given time and to adapt the content of the material displayed in accordance with the observed characteristics. A number of different systems have been developed based on this idea and a small number of products based on these ideas are beginning to be commercially realized. A brief review of some of these systems follows:
- US2008/0262909 methods and systems for what is termed "intelligent information display". The method comprises sensors, e.g. a video camera and face recognition software, to determine demographic information about the audience passing by or actually viewing a display screen at any given time. The demographic information is used by the processor to automatically match the displayed content to the demographics of the audience. If a particular audience member approaches the screen then it acts as a user interface. Gestures such as pointing or actual inputs such as by use of a computer mouse or keyboard are interpreted by the system processor to determine the specific interests of a member of the audience and to further refine the display content to those interests. The system is also capable of collecting statistical information such as number of viewers, demographic information about the viewers and time spent observing the display in general or specific advertisements/notices. This information can be used by system operators, advertising agencies, etc. to plan future display content.
- WO 2008/132741 teaches methods and systems for determining attention metrics of persons toward a display screen. Video motion detection and facial recognition techniques are used to track and count the persons that pass in front of the screen, to identify individual observers, and to distinguish between individuals are merely passing by or glancing at the screen and those that are actually looking at it and also to measure the exposure time and attention span for these individuals. The information gathered can be used off-line for statistical studies and planning of future display material or on-line for essentially real time adaptation of the display to the current audience statistics/demographics.
- WO 2008/149368 by two of the inventors of WO 2008/132741 describes methods for selecting the viewing message to be displayed based on the composition of the viewing audience as determined by the methods of the previous application.
- US 7,348,963 describes methods and systems for recognizing the presence and movements of persons in the field of view of a video camera. This information is used to define an interactive area in front of a digital display screen. A virtual "touch zone" is defined in the interactive area, the system identifies an observer's hand in the touch zone and tracks and uses motion of the hand to virtually manipulate objects on the display screen.
- US 2007/0182555 teaches a method and system in which a number of demonstration or sample products are displayed on a counter or shelf. Each product is labeled with a RFID tag and when it is picked up by a customer a signal is sent to a controller, which changes the information displayed on a screen located on or nearby the counter. The new information displayed on the screen will be relevant to the particular object picked up by the customer or related objects that might be of interest to him/her.

Ideally an advertising and merchandizing information signage system should have as a minimum the following capabilities:
1. It should be able to recognize when a customer approaches the vicinity of the screen and automatically adapt screen content accordingly.
2. It should be able to adapt screen content by taking into account information deduced from the physical characteristics of the customers and the accessories worn by them as automatically determined by analyzing the output of a variety of sensors.
3. It should be able to adapt screen content to implicit emotions and feedback exhibited by different walk-in customers. This information can be captured from a customer's body and facial gestures towards different advertisements.
4. It should be able to adapt the screen content based on the interest shown by a customer in a specific product as expressed by his/her picking it up or interacting with it in another way.
5. It should be able to adapt the screen content to one customer that is automatically selected from a crowd of customers.
6. It should be able to collect and analyze statistical data about the popularity of various advertisements and products for different locations and types of customers.

It is a purpose of the present invention to provide a comprehensive computer implemented system and method for adapting the advertising content of a digital display that has all of the above mentioned capabilities.

Further purposes and advantages of this invention will appear as the description proceeds.

### Summary of the Invention

In a first aspect the invention is a comprehensive computer implemented digital signage system for personalizing the advertising content according to the requirements and/or desire of a customer that is currently viewing the screen. The system automatically deduces which advertising content should be displayed from a plurality of sources of information. The sources of information used by the system include:
a. real time data gathered by a variety of sensors that gather data related to both the customer's physical characteristics and to the accessories that he/she carries or wears;
b. real time data gathered by a variety of sensors that observe actions carried out by the customer;
c. non-consumer specific data that might affect the customer's buying habits; and
d. statistical data collected by the system from previous customers, products, and sales or data entered manually by the customer or by others.

An embodiment of the system of the invention comprises:
A. a front-end comprising:
   i. a variety of sensors, which are adapted for collecting raw data related to the customer's physical characteristics and to the accessories that he/she carries or wears;
   ii. an Input Interpreter, which comprises hardware and software components that are adapted to analyze the input received from the sensors and to produce information about the customer that is required to personalize the advertising content;
   iii. a display screen; and
   iv. a Display Manager, which comprises hardware and software components that are adapted to allow it to determine what to display on the display screen based on information and earlier knowledge made available to it by other components of the system; and
B. a back-end comprising:
   i. a statistics data base, which comprises hardware and software components that are adapted to compile and store customer statistics for pattern discovery and compiling reports;
   ii. a knowledge data base, which comprises hardware and software components that are adapted to compile and store knowledge learned about customers' behavior;
   iii. an advertisement data base, which comprises hardware and software components that are adapted to compile and store the advertising content to be displayed, advertiser's constraints, and real-time data about the advertisements played;
   iv. a Statistics Analyzer, which comprises hardware that executes software components in a batch process over the statistics data base to find patterns in data about the customer and his/her behavior in order to produce statistical reports; and
   v. a Knowledge Discover, which comprises hardware that executes software components in a batch process over the statistics data base to find patterns in the customers' behavior.

The back-end can serve only one front-end or two or more front-ends that are located in the same store or in stores at different locations.

In embodiments of the system of the invention the output from the Statistics Analyzer is used by the store management and is not returned to the system.

In embodiments of the system of the invention the execution of the software components in the Knowledge Discoverer is implemented by incorporating standard data mining methods.

In embodiments of the system of the invention the output of the Knowledge Discoverer is automatically added to the knowledge data base and additional knowledge can be added manually by an employee/system administrator.

In embodiments of the system of the invention the sensors can be one or more of the following: video cameras, digital still cameras, microphones, volume sensors, motion sensors, heat detecting sensors, keyboards, computer mice, touch pads, and RFID sensors.

In embodiments of the system of the invention the software components of the Input Interpreter comprise one or more of: motion detection algorithms, face recognition algorithms, tracking algorithms, gender recognition algorithms, age recognition algorithms, accessories recognition algorithms, voice recognition algorithm, and gestures recognition algorithms.

In embodiments of the system of the invention the advertising material from which the Display Manager can choose to display is pulled out of the advertisement data base subject to the constraints that are stored therein.

In another aspect the invention is a method of using the comprehensive computer implemented digital signage system of the first aspect for personalizing the advertising content according to the requirements and/or desire of a customer that is currently viewing the screen. The method comprises the steps:
a. the sensors automatically collect raw data concerning the customers that are present in the region of interest;
b. the collected raw data is analyzed by the Input Interpreters;
c. the analyzed customers' data, environmental context data, previous knowledge and knowledge rules stored in the knowledge data base, and the advertisements and constraints stored in the advertisements data base are forwarded to the Display Manager;
d. the Display Manager applies a predefined heuristic algorithm to the inputs from step C to determine which content to display on the screen;
e. the Display Manager updates the statistics data base with the latest customer data and environmental data; and
f. the Display Manager updates the advertisement data base with the recently played advertisements.

In embodiments of the method of the invention one or more of the following processes is executed in the background:
a. the Statistics Analyzer analyzes the contents of the statistics data base in order to produce statistics reports;
b. the Knowledge Discoverer identifies hidden patterns in the contents of the statistics data base and updates the knowledge data base accordingly;
c. an employee updates the knowledge data base based on his/her knowledge; and
d. an employee updates the advertisement data base with new advertisements, schedules, and constraints.

According to the method of the invention, if there is more than one customer in the region of interest, then a pre-determined function based on knowledge rules that have been defined in advance and are stored in the knowledge data base is run to determine from the customer's physical characteristics and the accessories that he/she carries or wears to which of the customers the advertising content should be directed.

All the above and other characteristics and advantages of the invention will be further understood through the following illustrative and non-limitative description of preferred embodiments thereof, with reference to the appended drawings. In the drawings the same numerals are sometimes used to indicate the same elements in different drawings.

### Brief Description of the Drawings

- Fig. 1 shows schematically the architecture of the system of the invention and the general direction of flow of data;
- Fig. 2 schematically shows how the data for an individual customer is categorized according to an embodiment of the invention;
- Fig. 3 schematically shows the inputs and output of the Display Manager of the system of the invention; and
- Fig. 4 shows a cellular phone kiosk. comprising a digital signage system of the invention.

### Detailed Description of Embodiments of the Invention

The present invention is a comprehensive computer implemented system and method for adapting the advertising content of a digital signage system to personalize the content according to the requirements and/or desire of the customer that is currently viewing the screen as deduced by the system from a plurality of sources of information. The most important source of information about the current customer is real time data gathered passively by a variety of sensors that observe him/her and transmit the gathered data to a processing unit that interprets it to provide information such as the gender of the individual. Other sources of information can be statistical data based on prior knowledge gained from previous customers having similar characteristics, environmental data, and input to the system that is entered in real time manually by the customer himself or by others, e.g. a salesperson.

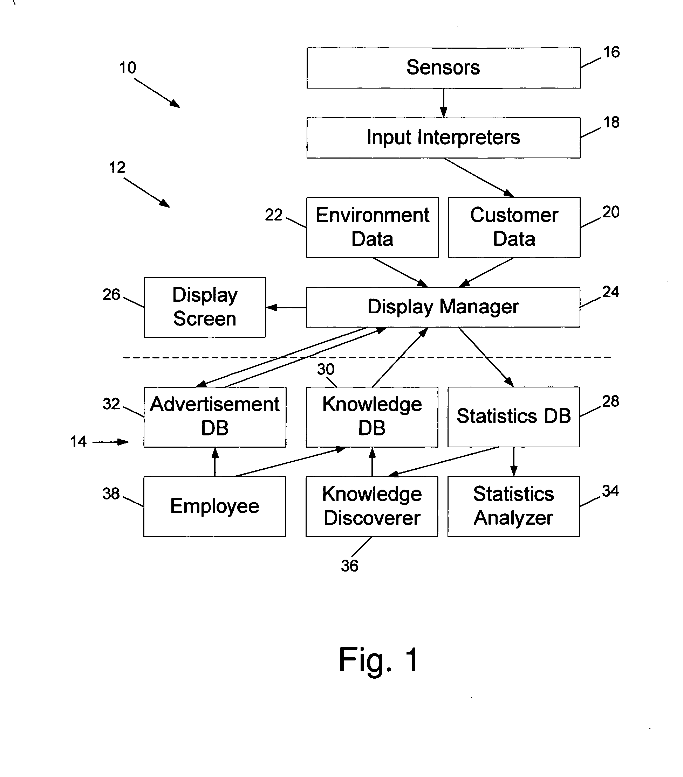

The architecture of the system of the invention **10** and the general direction of flow of data are shown schematically in Fig. 1. The system is comprised of two parts: the front-end **12,** all components of which are located in the sales area, and the back-end **14,** which is remotely located.

The front-end **12** comprises sensors **16,** which transfer data to Input Interpreter **18.** The output from Input Interpreter **18** is customer data **20.** The customer data **20** together with environmental data **22** are transferred to the Display Manager **24,** which uses this input and input from the back-end **14** to select the advertisement to be displayed on display screen **26.**

The back-end **14** can serve only one front-end **12** or be common to two or more front-ends that are located in the same store or in different stores located in the same city or in different cities, states, or even countries, for example in the case of international retail franchise organizations. Back-end **14** comprises three data bases (statistics data base **28,** knowledge data base **30,** and advertisement data base **32**), Statistics Analyzer **34,** and Knowledge Discover **36.**

Statistics data base **28** comprises hardware and software components that are adapted to compile and store customer statistics for compiling reports and pattern discovery. The statistics data base **28** receives customer data and other information from the Display Manager **24** and other sources, e.g. sensors located at the entrance to the store to gather general information such as the number of customers entering and leaving the store as a function of time. Statistics data base **28** contains, for example, the total number of people in the store during a specific time period; the number of viewers of the display screen **26** for a specific time and date; the demographic classification of those viewers, e.g. age and sex; and the reaction of the viewers to various advertisements. Data from statistics data base **28** is sent to Statistics Analyzer **34** and Knowledge Discover **36.**

Statistics Analyzer **34** comprises hardware that executes software components in a batch process over the statistics data base **28** to find patterns in the customers' data and behavior in order to produce statistical reports. Output from Statistics Analyzer **34** is used by the store management and is not returned to system **10.** Some examples for information that may be included in theses report are: a demographic distribution of the viewers, the distribution of viewers with regard to the different advertisements, viewing time distribution over different days of the weeks or different hours of the day, etc.

Knowledge Discoverer **36** comprises hardware that executes software components in a batch process over the statistics data base **28** to find patterns in the customers' behavior. The execution can be implemented by incorporating standard data mining methods. A typical pattern that illustrates the type of pattern found by Knowledge Discoverer **36** is, e.g. men in the age group of 25-30 years prefer to buy aftershave in the morning and perfume in the evening. The output of Knowledge Discoverer **36** is automatically stored in knowledge data base **30.**

Knowledge data base **30** comprises hardware and software components that are adapted to compile and store knowledge learned about customers' behavior. In addition to the output of Knowledge Discoverer **36,** knowledge can be manually added to knowledge data base 30-6 by an employee/system administrator **38.** The information contained in knowledge data base **30** from both sources is made available to the front-end Display Manager **24.**

Advertisement data base **32** comprises hardware and software components that are adapted to compile and store the advertising content to be displayed; advertiser's constraints, e.g. which advertisement should be played in each location and the maximum and minimum number of plays in a given time period; and real-time data such as how many times and when a given advertisement has been played. Advertisement data base **32** is in two-way communication with Display Manager **24.** The content to be displayed and advertiser's constraints in Advertisement data base **32** are manually updated by employee/system administrator **38** and the real-time data is updated automatically with data received from Display Manager **24.**

The sensors **16** are responsible for collecting raw data related to the customer's physical characteristics and to the accessories that he/she carries or wears. A non-limiting list of front-end sensors **16** that can be appropriately placed in the sales area to provide useful information about the customers includes: video cameras, digital still cameras, microphones, volume sensors, motion sensors, heat detecting sensors, keyboards, computer mice, touch pads, and RFID sensors. The sensors **16** are all adapted to transmit data gathered by them in real-time to Input Interpreter **18** by any technology known in the art, e.g. wired, wireless, Infra-Red, and Bluetooth.

The Input Interpreter **18** comprises hardware and software components that are adapted to analyze the input received from the sensors **16** and to produce information about the customer's that is required by the Display Manager **24.** The software components may include but are not limited to one or more of: motion detection algorithms, face recognition algorithms, tracking algorithms, gender recognition algorithms, age recognition algorithms, accessories recognition algorithms, voice recognition algorithm, and gestures recognition algorithms.

The main input to system **10** that allows it to adjust the content that is being played on screen **20** is the online data provided to Display Manager **24.** As shown in Fig.1, online data comprises two types of data: environment data **22** and customer data **20.**

Environment data **22** includes all non-customer specific data that might affect consumer buying habits. Examples of such data include: the location of the store (a store located in poor neighborhood should try and sell low-cost products), the time and date (people buy more in the evening since they work during the day and generally have more money to spend at the beginning of the month), and the climate (e.g. people might would tend not to leave their houses on a rainy day). Usually environment data is easily obtained from external sources.

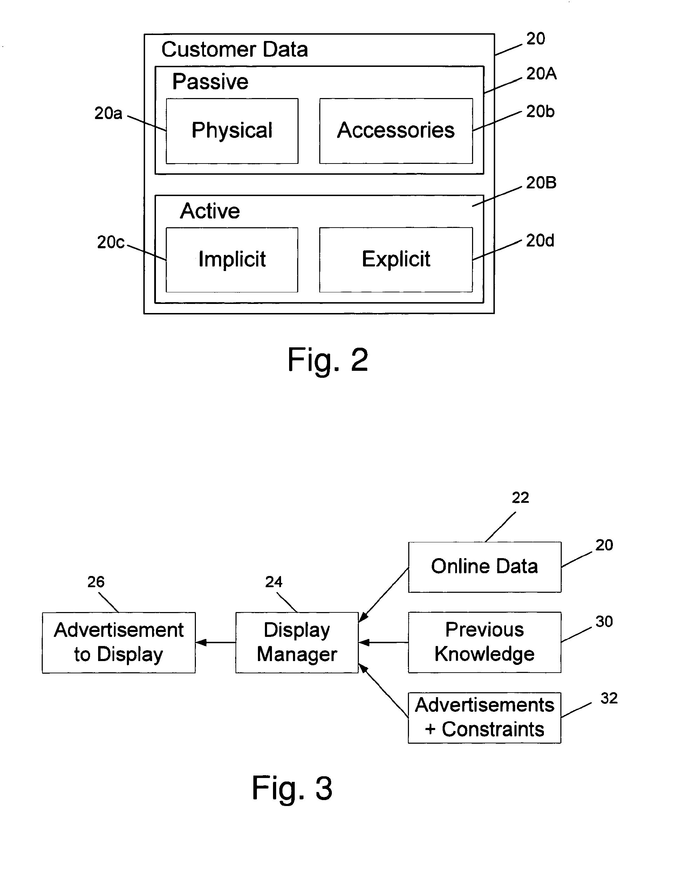

Customer' data **20** is the most important input to the system. Having a customer profile is essential to adjusting the content on the screen directly to his/her needs or desires. Fig. 2 schematically shows how all of the data for an individual customer is categorized according to an embodiment of the invention.

Customer data **20** can be divided into passive data **20A,** which comprises all of the data that the system collects about a customer which does not require an action to be made by him/her, and active data **20B,** which comprises all the data that the system collects about a customer due to actions he/she makes.

The first step in gathering customer data **20** is for the system to determine the presence and location of one or more customers in the sales area in front of the display screen **26.** Examples of suitable methods for carrying out this step can be based on the use of image processing and video motion detection algorithms to analyze streaming video signals from one or more cameras mounted at locations where they can continuously scan the region of interest or heat detection algorithms used to analyze images taken by cameras operating in the infra red range. Once a customer is identified the system is enabled to obtain a wide range of details about him/her and to integrate them to create as comprehensive a picture of his/her needs/desires as is possible.

The passive data **20A** can be subdivided into data **20a** related to the customer's physical characteristics and data **20b** related to the accessories that he/she carries or wears.

The data **20a** related to the customers physical characteristics includes all the details that can be gained about the customer by looking at his body, such as gender, age, race, height and weight, and hair and eye color. Examples of typical rules based on data **20a** to be used by Display Manager **24** are: gender - advertisements for aftershave are targeted to men; age - young people typically have more limited budgets; race - dark-skin people may be less interested in sun-guard products; height and weight - tall men may prefer to play basketball; hair and eye color, dark-eyed women may be interested in sunglasses having blue lenses.

Accessories include all the objects that the customer has that are not a part of his body such as: clothes, jewelry, glasses, bags or brief cases, cell phones. Examples of typical rules based on data **20a** to be used by Display Manager 24 are: clothes - display advertisements for business cell phones to a person who is wearing a suit; jewelry - display advertisements showing matching/similar earrings to a woman who is wearing only a necklace but no earrings; glasses - display an advertisement offering the customer a free optometrist check when buying a new pair of glasses; bags or brief cases - display advertisements for models of laptop that would fit into his/her bag; cell phones - display an advertisement for the new Nokia N96 if the customer is carrying the previous model N95.

Active data **20B** can be classified into implicit active data **20c,** which includes data about customers' actions that is collected without them noticing it, and explicit active data **20d,** which can be seen as an interaction of the system with the customer. It is to be noted that passive data **20A** collection is also implicit but differs from collection of implicit active data **20c** since it does not require any action by the customer

An example of implicit active data **20c** is determining the focus of attention of a customer by measuring the direction he/she is looking, i.e. measuring the angles of the customer's face and eyes. In this case the customer is performing the normal action of looking at a particular object and the system determines what that object is without interrupting him/her. Another example includes observing and understanding a customer's reaction to an advertisement by analyzing his emotions e.g. is he/she smiling or laughing, does he/she exhibit "closed" body language; is the customer speaking with an angry voice? A third example is the observation and analysis of the "behavior" of the customer in the store over time, including for example his/her route through the store and the time spent in different departments and/or next to different products.

An example of explicit active data **20d** is a customer who picks up a Nokia N95 cell phone from a showcase. The system can understand from this action that the customer is interested in this cell phone and automatically show the details of this cell phone on the screen. Another example may include a direct communication of the customer with the system. Examples of direct communication are: using gestures, e.g. moving his hand right means go to the next advertisement and left for the previous one; voice, e.g. "show me Nokia N95"; and touch, e.g. selecting a specific product by touching its icon on the screen. A different kind of explicit active data **20d,** which can be obtained for statistic reasons, is obtained by the system questioning the customer.

The Display Manager **24** comprises hardware and software components that are adapted to allow it to determine what to display on the screen based on the customer data **20** for the current customer, the environment data **22,** and based on earlier knowledge made available to it by the knowledge data base **30.** The advertising material from which Display Manager **24** can choose to display is pulled out of advertisement data base **32** subject to the constraints that are stored there. The inputs and output of Display Manager **24** are shown schematically in Fig. 3.

In order to illustrate the problem that must be solved by Display Manager **24** and the method in which the problem is solved, we assume a simple scenario where two customers are watching a screen and there are two advertisements available for showing at the present time in the advertisements data base - one for product A and one for product B. From the output of the Input Interpreters 18 the system has determined that the audience consists of a middle aged adult male approximately 35 years old and a boy approximately 12 years old. It is assumed that Display Manager **24** "knows" that product A is best suited for adults and product B is best suited for children. Display Manager **24** also "knows" that there is a greater chance that adults will make a purchase than children since adults generally have more money to spend. According to this knowledge plus instructions from the store management to always try to generate the maximum number of sales and profit, Display Manager **24** will clearly prefer to display the advertisement of product A. Now, assume that the advertisement time bought by the manufacturer of product A has already been spent. In this case Display Manager **24** will have no option but to display the advertisement of product B.

The problem of selecting the most appropriate film clip to display that has to be solved by Display Manager **24** can be very complicated, and depends a lot on the way that the knowledge rules and advertisements constraints are stored. To illustrate the principles of how the solution is found a simplified version of this problem where the knowledge rules and the advertisement constraints are restricted to certain form will now be described and a heuristic algorithm for selecting an advertisement according to these restrictions will be given.

Assume the following:
1. Each constraint in the advertisements data base is in the form:
   *IF condition THEN return c OTHERWISE return 0.*
   where,
   - *condition* may refer to a customer/environment attributes or to data associated with the advertisement (such as playing time left); and
   - c is the price of the product associated with this advertisement.
   A typical constraint of this form could be: IF the current time is after 6pm and the customer is a male and playing time is not over THEN return 5 USD for the Heineken advertisement OTHERWISE return 0 USD for the Heineken advertisement.
2. Each rule in the knowledge data base is in the form:
   *IF condition THEN return c OTHERWISE return 0.*
   where,
   - *condition* may refer to a customer/environment attributes; and
   - c is a number between 0 and 1 that estimates the wealth of this customer.

A typical rule of this form could be: IF the age of this customer is between 30 and 40 THEN return 0.6 OTHERWISE return 0.

An example of a heuristic algorithm for selecting the advertisement under these assumptions is:
1. For each customer and each advertisement, determine the returned value of c.
2. For each customer find the advertisement that returned the highest value of c.
3. For each customer and each knowledge rule, determine the returned value of c.
4. For each customer find the knowledge rule that returns the highest value of c.
5. For each customer determine the product of the values returned at steps 2 and 4.
6. Find the advertisements that returned the highest value at step 5.
7. If only one advertisement was found in step 6 - play it. If two or more were found - play one of them randomly. If none were found - play one advertisement of all available advertisements randomly.

This above algorithm relates to the customer's wealth and the price of a product that is associated with a commercial and finds a customer and an advertisement pair that maximizes the product of these values.

Referring to Fig. 1, the general flow of information in system **10** is as follows:
1. The sensors **16** collect raw data concerning the customers that are present in the region of interest.
2. The collected raw data is analyzed by the Input Interpreters **18.**
3. The online data, i.e. the analyzed customers' data **20** and environmental context data **22;** previous knowledge acquired from the knowledge data base 30; and the advertisements and constraints acquired from the advertisements data base **32** are forwarded to the Display Manager **24.**
4. The Display Manager **24** decides on the basis of the aforementioned inputs which content to display on the screen **26.**
5. The Display Manager **24** updates the statistics data base **28** with the latest customer data **20** and environmental data **22.**
6. The Display Manager **24** updates the advertisement data base **32** with the recently played advertisements.

While all of the above is continuously taking place, in the background one or more of the following processes may be executed:
a. The Statistics Analyzer **34** analyzes the contents of the statistics data base **28** in order to produce statistics reports for the local store's administrative staff.
b. The Knowledge Discoverer **36** identifies hidden patterns in the contents of the statistics data base **34** and updates the knowledge data base **36** accordingly.
c. An employee **38** updates the knowledge data base **30** based on his/her knowledge.
d. An employee **36** updates the advertisement data base **32** with new advertisements, schedules, and constraints.

### Example

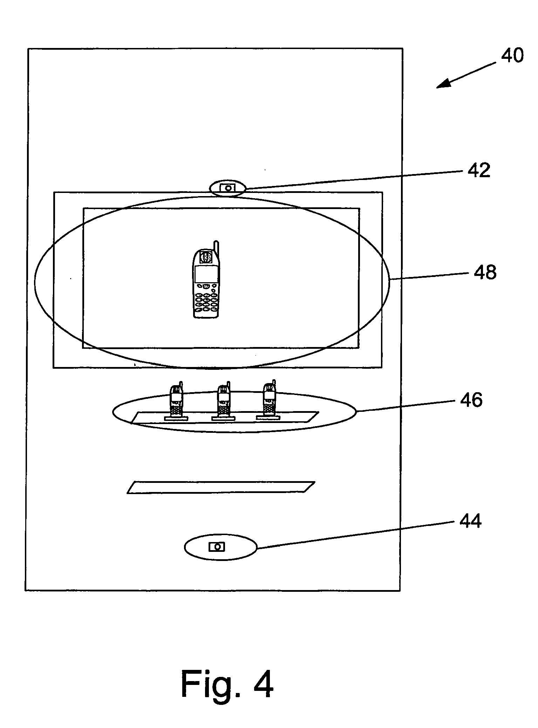

The automatic selection of digital advertising material to be displayed in the cellular phone kiosk **40** shown in Fig. 4 will now be described as an illustrative example of the method and system of the invention.

The system front-end comprises the following elements:
A. An LCD screen 48 for playing promotional clips describing the features of the cellular phones available in the kiosk;
B. An open showcase having glass shelves on which are placed a number of models of cellular phones 46 that can be inspected by the customers;
C. Two sensors:
   i. A first video camera 42 that is located near the top of kiosk 40 and aimed to record images of the area in front of LCD screen 48; and
   ii. a second video camera 44 that is located near the bottom of kiosk 40 and aimed upwards to record images of the cellular phones 46 on the shelves;
D. A computer running:
   i. Input interpreter software for:
      a. Face recognition
      b. Gender recognition
      c. Clothes type recognition
      d. Hand-lifting recognition
      e. "Pick-up" recognition
   ii. Display manager software.

The system back-end includes the following elements:
A. A statistics data base;
B. An advertisement data base containing cellular phone promotional clips;
C. A statistics analyzer.

The system will run as follows:
1. As soon as it is activated the system enters the *attractive* mode in which the first ten seconds of each cellular phone clip is played in a loop, until at least one customer is detected staring at the screen or a cell-phone is picked-up.
   A. If a "pick-up" recognition algorithm running on the computer determines from the images collected by the second camera 44 that one of the cellular phones 46 has been picked up:
      i. The cellular phone clip associated with the phone that was picked up is played on LCD screen 48.
      ii. When the clip ends or the cell-phone is returned back to its place in the showcase then the system returns to the *attractive* mode.
   B. If none of the cellular phones 46 is picked up but a face recognition algorithm running on the computer determines from the images collected by the first camera 42 that at least one customer is watching the screen, the system enters the *interactive* mode:
      i. Gender, age and clothes type recognition algorithms are then run on the computer to determine from the images collected by the first camera 42 the customers' gender and age and the type/style of clothes worn by him/her.
      ii. If there is more than one customer, then a pre-determined function is run on the computer to determine from his or her gender, age and clothes type which customer has the potential to spend the largest amount of money. The function is based on knowledge rules that have been defined in advance and are present in the knowledge data base. Typical examples of possible knowledge rules are: "women buy more than men", "elder people spend more money"'; and "people wearing elegant clothes buy more expensive products".
      iii. Each cellular phone clip has a gender, age and clothes profile associated with it. This profile is supplied manually together with the advertisement by an employee/administrator). For example a Nokia N96 phone may be associated with 25-50 year old men who wear elegant clothes. Based on these profiles the clips are sorted wherein the clip that most closely matches the gender, age and clothes type of the selected customer is placed first.
      iv. Play the first clip in the ordered list.
      v. If this customer raises his right hand, then the system recognizes this agreed upon signal and shows the next clip in the list.
      vi. On the other hand, if this customer raises his left hand, then the system shows the previous clip in the list.
      vii. When the currently played clip ends the system returns to the *attractive* mode.
2. The statistic data base is updated with the customer data collected about all of the customers in the crowd and the cellular phone clips that were actually played.
3. On a periodical basis, i.e., weekly, the Statistics Analyzer processes the data in the statistics data base and compiles and sends reports to the store manager.

Note that in this simple example the knowledge data base is simulated by the pre-determined function that finds the customer with the potential to spend the greatest amount of money. Also the advertisement data base contains no restrictions regarding the different clips. Restrictions on the clips are not necessary because all the products belong to the same store and no external entities are involved.

Although embodiments of the invention have been described by way of illustration, it will be understood that the invention may be carried out with many variations, modifications, and adaptations, without exceeding the scope of the claims.

## Claims

1. A comprehensive computer implemented digital signage system for personalizing the advertising content according to the requirements and/or desire of a customer that is currently viewing the screen as deduced by said system from a plurality of sources of information wherein said sources of information comprise:
a. real time data gathered by a variety of sensors that gather data related to both said customer's physical characteristics and to the accessories that he/she carries or wears;
b. real time data gathered by a variety of sensors that observe actions carried out by said customer;
c. non-consumer specific data that might affect said customer's buying habits; and
d. statistical data collected by said system from previous customers, products, and sales or data entered manually by said customer or by others.

2. The system of claim 1, wherein said system comprises:
A. a front-end comprising:
i. a variety of sensors, which are adapted for collecting raw data related to the customer's physical characteristics and to the accessories that he/she carries or wears;
ii. an Input Interpreter, which comprises hardware and software components that are adapted to analyze the input received from said sensors and to produce information about said customer that is required to personalize the advertising content;
iii. a display screen; and
iv. a Display Manager, which comprises hardware and software components that are adapted to allow it to determine what to display on said display screen based on information and earlier knowledge made available to it by other components of said system; and
B. a back-end comprising:
i. a statistics data base, which comprises hardware and software components that are adapted to compile and store customer statistics for pattern discovery and compiling reports;
ii. a knowledge data base, which comprises hardware and software components that are adapted to compile and store knowledge learned about customers' behavior;
iii. an advertisement data base, which comprises hardware and software components that are adapted to compile and store the advertising content to be displayed, advertiser's constraints, and real-time data about the advertisements played;
iv. a Statistics Analyzer, which comprises hardware that executes software components in a batch process over said statistics data base to find patterns in data about the customer and his/her behavior in order to produce statistical reports; and
v. a Knowledge Discover, which comprises hardware that executes software components in a batch process over said statistics data base to find patterns in said customers' behavior.

3. The system of claim 2, wherein the back-end serves only one front-end.

4. The system of claim 2, wherein the back-end serves two or more front-ends that are located in the same store or in stores at different locations.

5. The system of claim 2, wherein the output from the Statistics Analyzer is used by the store management and is not returned to said system.

6. The system of claim 2, wherein the execution of the software components in the Knowledge Discoverer is implemented by incorporating standard data mining methods.

7. The system of claim 2, wherein the output of the Knowledge Discoverer is automatically added to the knowledge data base and additional knowledge can be added manually by an employee/system administrator.

8. The system of claim 1, wherein said sensors include one or more of the following: video cameras, digital still cameras, microphones, volume sensors, motion sensors, heat detecting sensors, keyboards, computer mice, touch pads, and RFID sensors.

9. The system of claim 2, wherein the software components of the Input Interpreter comprise one or more of: motion detection algorithms, face recognition algorithms, tracking algorithms, gender recognition algorithms, age recognition algorithms, accessories recognition algorithms, voice recognition algorithm, and gestures recognition algorithms.

10. The system of claim 2, wherein the advertising material from which the Display Manager can choose to display is pulled out of the advertisement data base subject to the constraints that are stored therein.

11. A method of using the comprehensive computer implemented digital signage system of claim 2 for personalizing the advertising content according to the requirements and/or desire of a customer that is currently viewing the screen as deduced by said system from a plurality of sources of information, said method comprising the steps:
a. the sensors automatically collect raw data concerning the customers that are present in the region of interest;
b. said collected raw data is analyzed by the Input Interpreters;
c. said analyzed customers' data, environmental context data, previous knowledge and knowledge rules stored in the knowledge data base, and the advertisements and constraints stored in the advertisements data base are forwarded to the Display Manager;
d. said Display Manager applies a predefined heuristic algorithm to the inputs from step C to determine which content to display on the screen;
e. said Display Manager updates the statistics data base with the latest customer data and environmental data; and
f. said Display Manager updates the advertisement data base with the recently played advertisements.

12. The method of claim 11, wherein in the background one or more of the following processes is executed:
a. the Statistics Analyzer analyzes the contents of the statistics data base in order to produce statistics reports;
b. the Knowledge Discoverer identifies hidden patterns in the contents of said statistics data base and updates the knowledge data base accordingly;
c. an employee updates said knowledge data base based on his/her knowledge; and
d. an employee updates the advertisement data base with new advertisements, schedules, and constraints.

13. The method of claim 11, wherein, if there is more than one customer in the region of interest, then a pre-determined function based on knowledge rules that have been defined in advance and are stored in the knowledge data base is run to determine from the customer's physical characteristics and the accessories that he/she carries or wears to which customer the advertising content should be directed.
